# EUROPEAN PATENT APPLICATION

(11) **EP 2 335 870 A1**
(43) Date of publication of application: **22.06.2011**
(21) Application number: 10193931.2
(22) Date of filing: 07.12.2010
(51) Int. Cl.: B23Q 11/00

(54) **Dust extractor for drilling machine**

(30) Priority: 15.12.2009 GB 0921859
(71) Applicant: Black & Decker Inc., Newark, Delaware 19711 (US)
(72) Inventor: Hahn, Norbert, 65510 Hunstetten-Limbach (DE)
(74) Representative: Bell, Ian Stephen

(57) **Abstract**

A suction cup dust extractor for a drill comprising: a housing (10); a drill collar (12) attached to the housing (10), having a drill passage (18) formed through it; a recess (38) formed by the walls (50, 52) of the housing (10) having an opening and which, in use, locates against a work piece to create a chamber; an single aperture (24) located on the housing (10) through which air can pass; at least one first air passage (32) formed within the housing (10)which enables air to pass from the drill passage (18) to the aperture (24); and at least one second air passage (36) formed within the housing (10) which enables air to pass from the recess (38) and the aperture (24); characterized in that the drill collar (12) comprises a plurality of markers (100) which are located around its periphery

## Description

The present invention relates to a dust extractor for use with a drill, hammer drill or hammer, and in particular to a suction cup dust extractor.

US4205728 and DE202008008561 both disclose a suction cup dust extractor for a drill. The present invention aims to provide an improvement in the design over those disclosed in US4205728 and DE202008008561.

Accordingly, there is provided a suction cup dust extractor for a drill comprising:
a housing;
a drill collar attached to the housing, having a drill passage formed through it;
a recess formed by the walls of the housing having an opening and which, in use, locates against a work piece to create a chamber;
an single aperture located on the housing through which air can pass;
at least one first air passage formed within the housing which enables air to pass from the drill passage to the aperture; and
at least one second air passage formed within the housing which enables air to pass from the recess and the aperture;
characterized in that the drill collar comprises a plurality of markers which are located around its periphery.

An embodiment of the invention will now be described with reference to enclosed drawings of which:

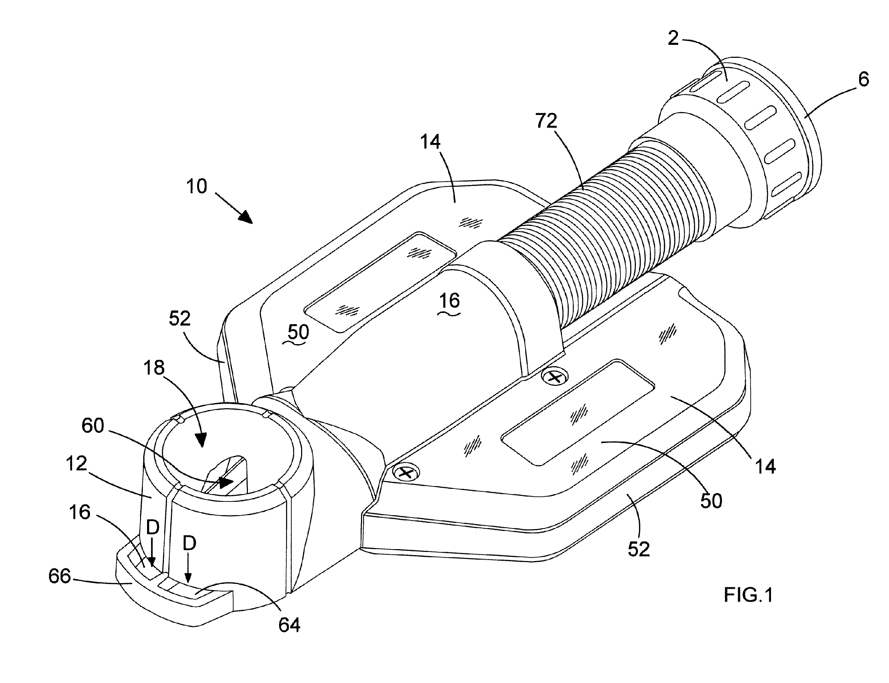

Figure 1 shows a perspective view of the top of the suction cup dust extractor;

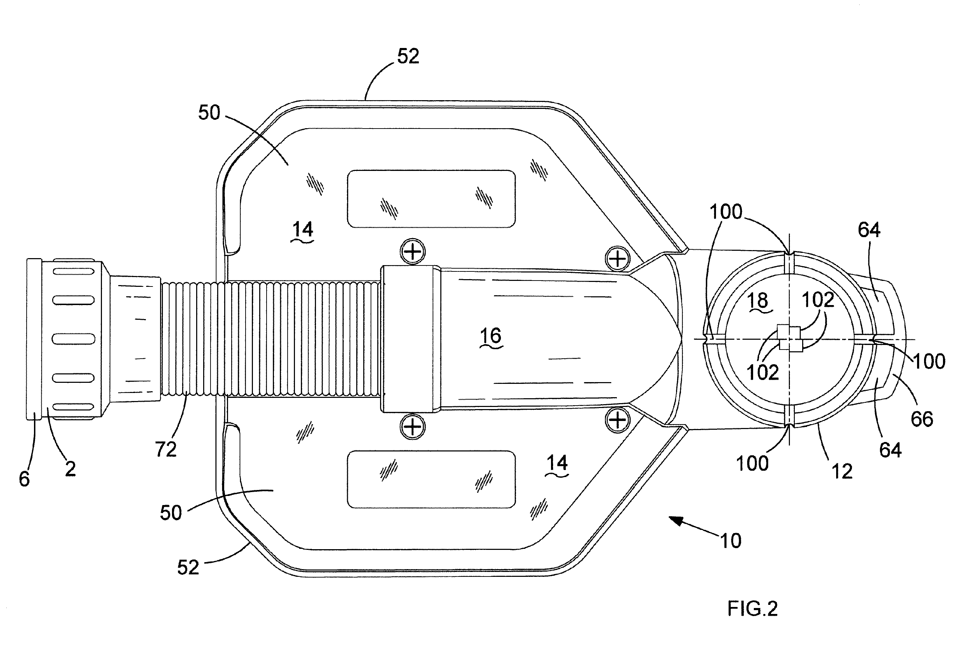

Figure 2 shows a top view of the suction cup dust extractor;

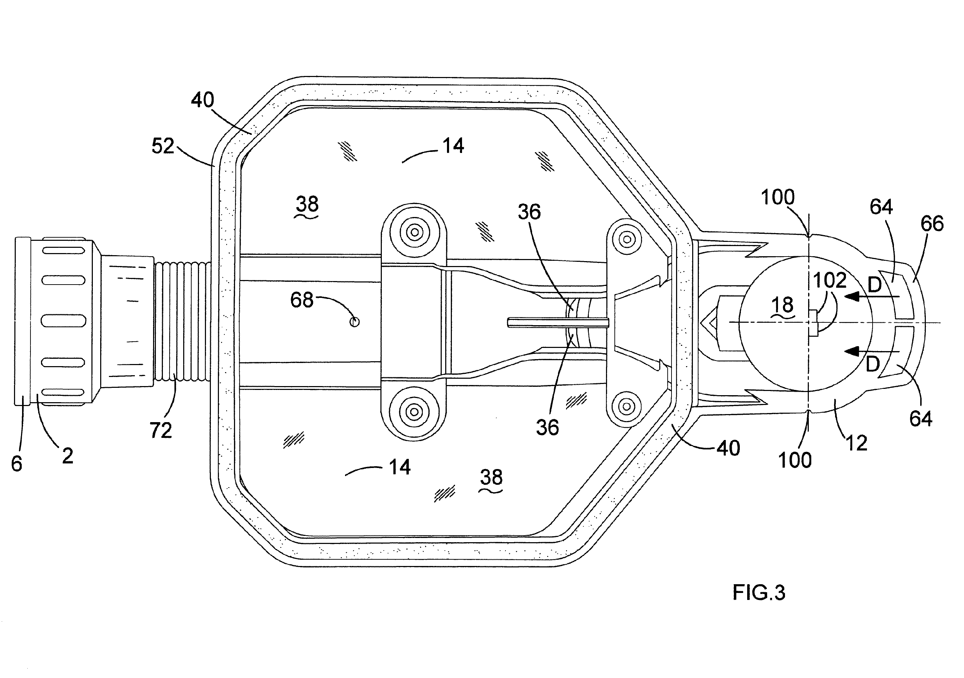

Figure 3 shows a bottom view of the suction cup dust extractor;

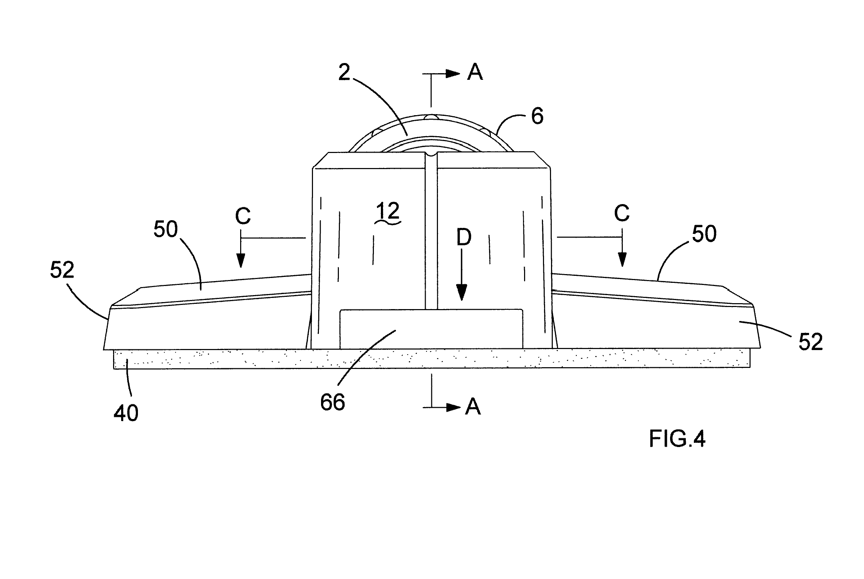

Figure 4 shows a front view of the suction cup dust extractor;
Figure 5 shows a vertical cross sectional view of the suction cup dust extractor in the direction of Arrows A in Figure 4;

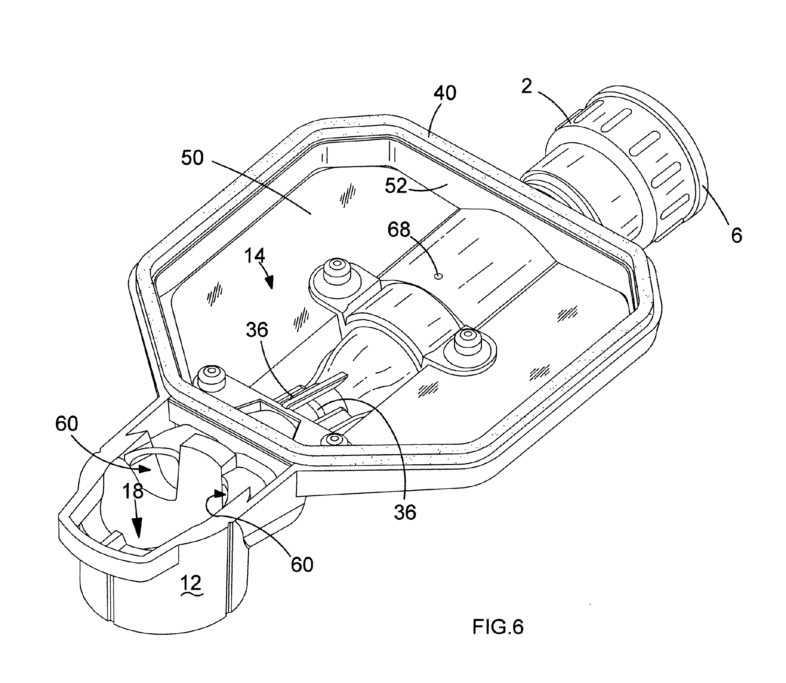

Figure 6 shows a perspective view of the underside of the suction cup dust extractor; and

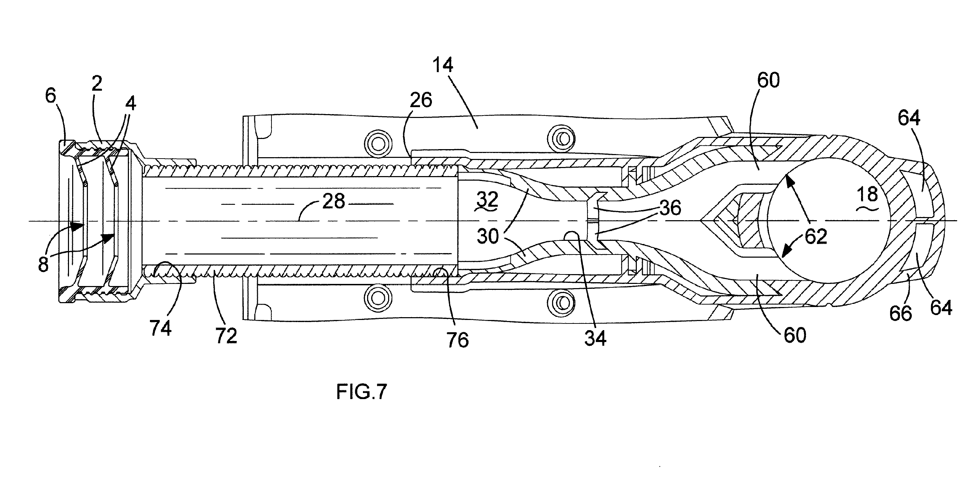

Figure 7 shows a horizontal cross sectional view of the suction cup dust extractor in the direction of Arrows C in Figure 4.

Referring to the enclosed drawings, the suction cup dust extractor comprises a housing 10 and a drill collar 12 rigidly connected to it at the top end of the housing 10. The housing 10 comprises a skirt 14 with a bridge 16 formed on top of the skirt 14. The bridge 16 extends from the middle of the skirt 16 to the top end of the skirt 16 where it is attached to the side of the drill collar 12. The skirt 14 has a top wall 50 and side walls 52 which form a large recess 38, on the opposite side of the skirt 14 to that on which the bridge 16 is attached, which has an opening which faces away from the bridge 16.

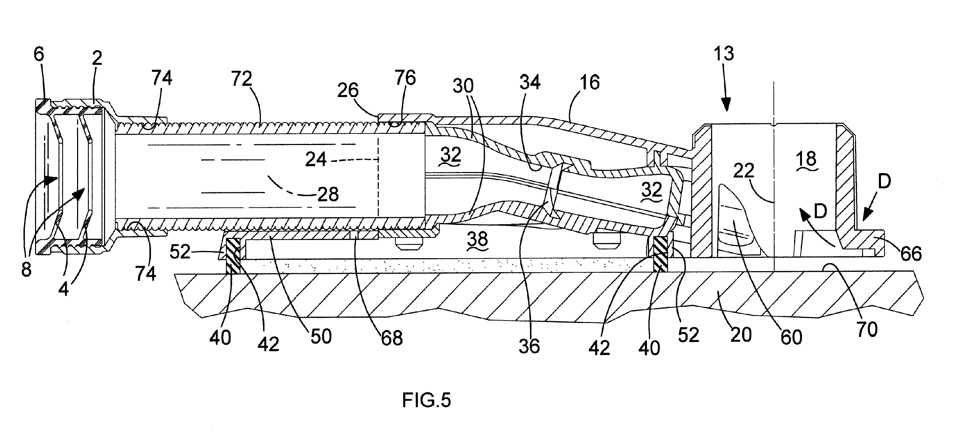

The drill collar 12 forms a drill passage 18 which enables a cutting tool, such as a drill bit (not shown), to pass through it (direction of Arrow B in Figure 5) to engage a work piece 20. The drill collar 12 has a longitudinal axis 22. Both the drill passage 18 and the opening of the recess 38 are orientated in the same direction.

Formed in end 26 of the bridge 16 in the middle of the skirt 14 is an aperture 24 which provides an air exit. The aperture 24 has a longitudinal axis 28 which is perpendicular to and intersects with the longitudinal axis 22 of the drill collar 12.

Formed by internal walls 30 of the housing 10 is a first passage 32 which extends from the aperture 24 towards the drill passage 18 of the drill collar 12. Formed within the first passage 32 is a throat 34 where the diameter of the passage 32 is reduced. Two apertures 36 are formed through the wall of the passage 32 at the narrowest point of the throat 34. The apertures 36 provide a passageway from the passage 32 to the recess 38 formed by the skirt 14.

The passage 32 splits into two passages 60 between the throat 34 and the drill passage18, each connecting with the drill passage 18 through a separate aperture 62.

An inlet air passage 64 is formed in by a frame 66 attached to the base of the drill collar 12 and operates in the same manner as that described in EP1457288. Air can pass through the inlet air passage into the drill collar 12 as shown by Arrow D.

A seal 40 locates in a groove 42 formed around the periphery of the wall of the skirt 20 on the underside of the skirt 14. When the suction cup dust extractor is placed against a work piece 20, it engages with the seal 40, the work piece 20 sealing the opening to the recess 38 to form a chamber.

An air hole 68 is provided in the wall 50 of the skirt 20 to provide a small air passage between the recess and the surrounding atmosphere. During the use of the suction cup dust extractor, the hole 68 ensures that there is a limited but constant air flow in the recess formed under the skirt 20 if the seal provides a perfect air seal with the work piece 20.

The suction cup extractor further comprises a tubular connection collar 2 which connects to a vacuum source (not shown). A rubber seal 4 is fastened inside of the connection collar 2 and which comprises two rubber rings 4 which extend radially inwards from the drill collar 12 with an aperture 8 formed through them. The rings 4 are capable of gripping onto the nozzle (not shown) of a hose (not shown) of the vacuum source. As the rings 4 are resilient, they can stretch radially outwardly, increasing the size of the apertures 8, enabling nozzles of different sizes to be used. The rings 4 would then grip the nozzle due to their resilience and frictionally hold the nozzle.

The connection collar 2 connects to the aperture 24 via a flexible tube 72. One end of the flexible tube 72 is held in a sleeve 74 formed in the connection collar 2, the other in a sleeve 76 formed in the bridge 16. The flexible tube 72 can be stretched to extend its length and move the collar 2 away from the housing 10 or be bent or twisted to allow the connection collar 2 to be moved to a range of positions relative to the aperture 24. The flexible tube 72 is made from rubber.

In use, the suction cup dust extractor is placed against a surface 70 of the work piece 20 so that the seal 40 makes contact with it. A chamber is formed when opening of the recess 38, formed by the walls 50, 52, of the skirt 14 is sealed by the surface 70 of the work piece 20. The suction device is activated and air is sucked through the connection collar 2, through the flexible tube 72, through the aperture 24, through the first passage 32, through the pair of separate passages 60, through the apertures 62 and then from the drill passage 18. As air passes through the throat 34 of the first passage 32, it speeds up, causing a reduced pressure inside of the two apertures 36 due to a venturi effect. This results in the air in the recess 38 to be sucked out through the apertures 36 and into the passage 32. This causes the skirt 14 and hence the dust extractor, to be attached to the surface 70 due to the suction. The hole 68 ensures that there is a constant flow of air from the hole 68, through the recess 38, and then through the two apertures 36. The operator can then drill a hole in the surface by passing the drill bit through the drill collar 12 and drilling into the surface 70. Any debris generated during the drilling process will be sucked up into the drill passage 18 and then into passages 60. The use of two passages provides better debris clearance. The debris is then transported through the passage 32, through the aperture 24, through the flexible tube 72 and then through the connection collar 2. The hole 68 ensures that there is always air passing through the two aperture into the passage 32, thus ensuring no debris passes into the apertures 36 or the recess 38.

Formed on the external side wall of the drill collar 12 are four markers in the form of alignment grooves 100. Each marker 100 comprises an elongate groove which extends along the length of the wall of the drill collar 12 in a direction parallel to the longitudinal axis (22) of the drill collar (12). The markers (100) are angularly spaced by 90 degrees (102) about the longitudinal axis (22) relative to each other.

When the dust extractor is used, the drill collar 12 obscures the view of where a drill bit, which passes through the drill collar 12, engages with the surface of the work piece 20. The markers provide a visual indicator to the operator to assist in aligning the drilling collar 12 to ensure that any hole which is drilled in the work piece by a drill bit which passes through the drill collar 12 is in the correct position.

## Claims

1. A suction cup dust extractor for a drill comprising:
a housing (10);
a drill collar (12) attached to the housing (10), having a drill passage (18) formed through it;
a recess (38) formed by the walls (50, 52) of the housing (10) having an opening and which, in use, locates against a work piece to create a chamber;
an single aperture (24) located on the housing (10) through which air can pass;
at least one first air passage (32) formed within the housing (10)which enables air to pass from the drill passage (18) to the aperture (24); and
at least one second air passage (36) formed within the housing (10) which enables air to pass from the recess (38) and the aperture (24);
**characterized in that** the drill collar (12) comprises a plurality of markers (100) which are located around its periphery.

2. A suction cup dust extractor as claimed in claim 1 wherein the markers (100) are located on an external side surface of the drill collar 12.

3. A suction cup dust extractor as claimed in either of claims 1 or 2 wherein each of the markers comprises an elongate groove (100) which extends along the length of the drill collar in a direction parallel to the longitudinal axis (22) of the drill collar (12).

4. A suction cup dust extractor as claimed in claim 3 wherein:
the markers (100) are angularly spaced about the longitudinal axis (22) by equal amounts relative to each other.

5. A suction cup dust extractor as claimed in claim 4 wherein:
the markers (100) are angularly spaced by 90 degrees (102) about the longitudinal axis (22) relative to each other.
